# EUROPÄISCHE PATENTANMELDUNG

(11) **EP 0 579 136 A1**
(43) Veröffentlichungstag der Anmeldung: **19.01.1994**
(21) Anmeldenummer: 93111031.6
(22) Anmeldetag: 09.07.1993
(51) Int. Cl.: C02F 9/00, C02F 1/66, C02F 1/28, C02F 1/26

(54) **Verfahren zur Behandlung der bei der Säuberung von Garkammern für die Räucherung von Fleischwaren anfallenden Spülflüssigkeit**

(30) Priorität: 11.07.1992 DE 4222907
(71) Anmelder: PASSAVANT-WERKE AG, D-65322 Aarbergen 7 (DE)
(72) Erfinder: Bachon, Ulrich, Dipl.-Ing., D-65582 Diez (DE)

(57) **Zusammenfassung**

Bei der Säuberung von Garkammern für die Räucherung von Fleisch- und Fischwaren fällt eine hochalkalische Spülflüssigkeit an, die nicht ohne Vorbehandlung in die Ortskanalisation geleitet werden kann. Diese Spülflüssigkeit wird erfindungsgemäß getrennt von anderen Abwässern aufgefangen und z.B. durch Neutralisation vorbehandelt, wobei die bei der Neutralisation entstehenden Reaktionsprodukte durch Emulsionsspaltung oder Ad/Absorption abgetrennt werden. Vorzugsweise wird einem vorhandenen Bodenablauf, der die Spülflüssigkeit aus den Garkammern aufnimmt, eine Umschalteinrichtung nachgeschaltet, die bei Beginn der Säuberung auf die Behandlungseinrichtung umgeschaltet wird. Die Umsteuerung kann auch automatisch von einem pH-Messer vorgenommen werden.

## Beschreibung

Die Erfindung bezieht sich auf die Räucherung von Fleischwaren in Garkammern, die mit Rauchgasen beschickt werden. Die Rauchgase werden in der Regel extern erzeugt und in die Garkammern gleichmäßig verteilt eingeleitet.

An den Oberflächen der Garkammer und der Rauchverteilungseinrichtungen schlagen sich - ggf.mit Fett angereicherte - Rauchpartikel nieder und bilden im Lauf der Zeit einen festen Rauchharzbelag, der die Betriebsbereitschaft beeinträchtigt. Die Rauchharze werden deshalb in regelmäßigen Abständen abgespült. Hierzu werden spezielle Reinigungsmittel, sog. Rauchharzentferner, verwendet, die als Lösemittel für die Harze Natronlauge in größerer Konzentration enthalten. Die Reinigung erfolgt etwa wöchentlich. Der Rauchharzentferner wird auf die zu reinigenden Flächen aufgetragen oder aufgesprüht und eine bestimmte Zeit einwirken gelassen. Danach wird mit Wasser abgespült, wobei ein hochalkalisches Abwasser entsteht, das in der Regel nicht ohne weiteres in die Ortskanalisation eingeleitet werden darf.

Falls der fleischverarbeitende Betrieb, in dem die Räucheranlage vorkommt, mit einem Fettabscheider ausgerüstet ist, mit dem die betrieblichen, fetthaltigen Abwässer behandelt werden, kann das Einleiten der aus der Spülung der Räucheranlage stammenden Spülflüssigkeit in den Fettabscheider zu Störungen führen. Außerdem werden die im Fettabscheider gesammelten Fette durch die hochalkalische Spülflüssigkeit so verändert, daß sie nicht wiederaufbereitet werden können.

Die hochalkalische Spülflüssigkeit schädigt auch alle Ablauf- und Fortleiteinrichtungen, die sie durchfließt. Aus dieser Schilderung des derzeitigen Zustands leitet sich die Aufgabe her, die Spülflüssigkeit vor dem Einleiten in die Kanalisation so zu behandeln, daß sie den Mindestanforderungen für das Einleiten nach den Ortssatzungen gerecht wird. Diese Aufgabe wird dadurch gelöst, daß die Spülflüssigkeit getrennt von sonstigen Abwässern aufgefangen und entsorgt, oder entsprechend den Einleitbedingungen behandelt wird. Die Behandlung kann z.B. in einer Neutralisation mit organischen Säuren bestehen. Die bei der Neutralisation gebildeten Stoffe können in einer Emulsionsspaltung oder durch Adsorption oder Absorption abgetrennt werden. Auch eine Flüssig/Flüssig-Extraktion mittels Paraffinöl oder Perchlorethylen ist denkbar. Durch dieses Vorgehen wird die Spülflüssigkeit jetzt so aufbereitet, daß sie gemäß den behördlichen Anforderungen gefahrlos abgeleitet werden kann. Die abgetrennten Inhaltsstoffe können als Sonderabfall entsorgt werden.

In den Fällen, in denen die Spülflüssigkeit bereits, z.B. über einen Bodenablauf, in die Kanalisation eingeleitet wird, ist es erforderlich, in diese Ableitung eine Umschalteinrichtung einzubauen, die bei Anfall von Spülflüssigkeit auf die Abwasserbehandlungseinrichtung umleitet. Es ist zweckmäßig, diese Umsteuerung selbsttätig erfolgen zu lassen und sie von menschlichen Unzulänglichkeiten unabhängig zu machen. Dies kann z.B. durch einen Sensor geschehen, der den pH-Wert der Spülflüssigkeit im Ablauf aus der Garkammer mißt. Dieser Sensor kann auch das Neutralisationsmittel dosieren und die Mischeinrichtung in Betrieb setzen. Bei voll automatisierten Räucheranlagen ist es zweckmäßig, von der Programmsteuerung auch gleich die Reinigungsintervalle und die Spülvorgänge mit der Abwasserbehandlung ansteuern zu lassen.

In den Abbildungen sind verschiedene Möglichkeiten zur Durchführung des Verfahrens schematisch dargestellt, und zwar zeigen:
- Fig 1: eine Behandlungsanlage mit Auffang- und Speicherbehälter,
- Fig. 2: eine andere Behandlungsanlage mit einer Neutralisationsstufe,
- Fig. 3: eine dritte Anlage mit einer der Neutralisation nachgeschaltete Spalt- oder Absorptionsstufe,
- Fig. 4: eine in eine vorhandene Ableitung eingebaute Umschaltvorrichtung mit dem gesteuerten Ablauf in eine nachgeordnete Behandlungsstufe.

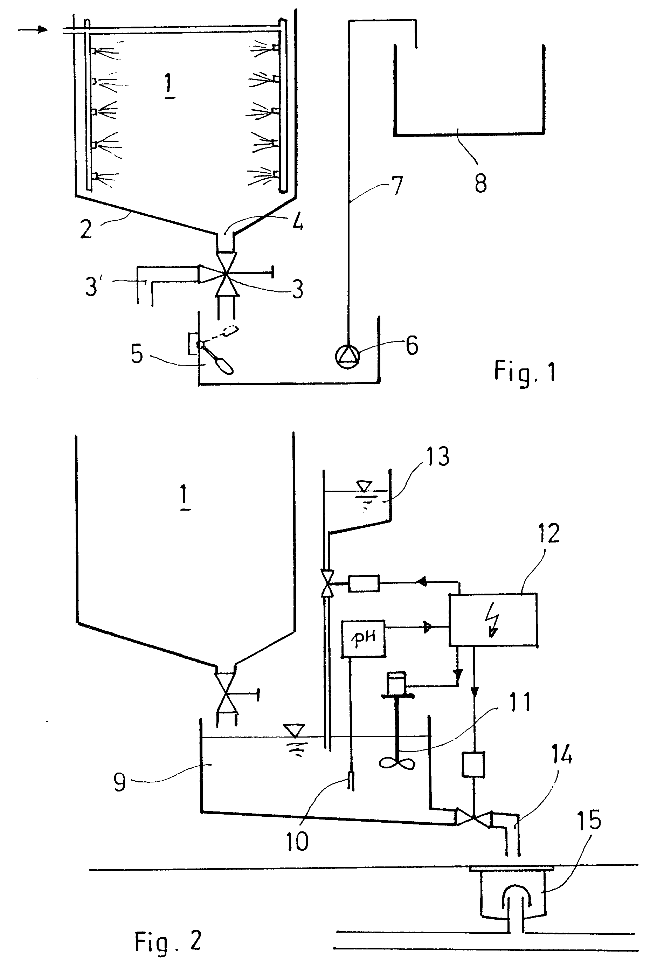

Fig. 1 zeigt schematisch eine Garkammer 1 im Vertikalschnitt. Der Boden 2 ist konisch geneigt und führt an der tiefsten Stelle zu einem durch einen Umschaltschieber 3 verschließbaren Ablauf 4. Der Ablauf mündet in einen Pumpensumpf 5 mit Pumpe 6, die die abgelaufene hochalkalische Spülflüssigkeit via Hebeleitung 7 in einen Behälter 8 pumpt, der ein Stapelbehälter oder eine Neutralisationsstufe oder eine Absorptionseinrichtung sein kann. Für unbelastetes Abwasser hat der Umschaltschieber 3 eine zweite Stellung 3'.

Bei der Anlage nach Fig. 2 fehlt die Hebeeinrichtung mit Pumpe. Die Spülflüssigkeit wird in einem Neutralisationsbecken 9 aufgefangen, das mit einem pH-Fühler 10, einem Mischerrührwerk 11 und einer von der Programmsteuerung 12 überwachten Dosiereinrichtung 13 für das Säuerungsmittel (organische Säuren o.ä.) ausgestattet ist. Der Auslauf 14 in die Bodenentwässerung 15 wird ebenfalls vom pH-Fühler angesteuert.

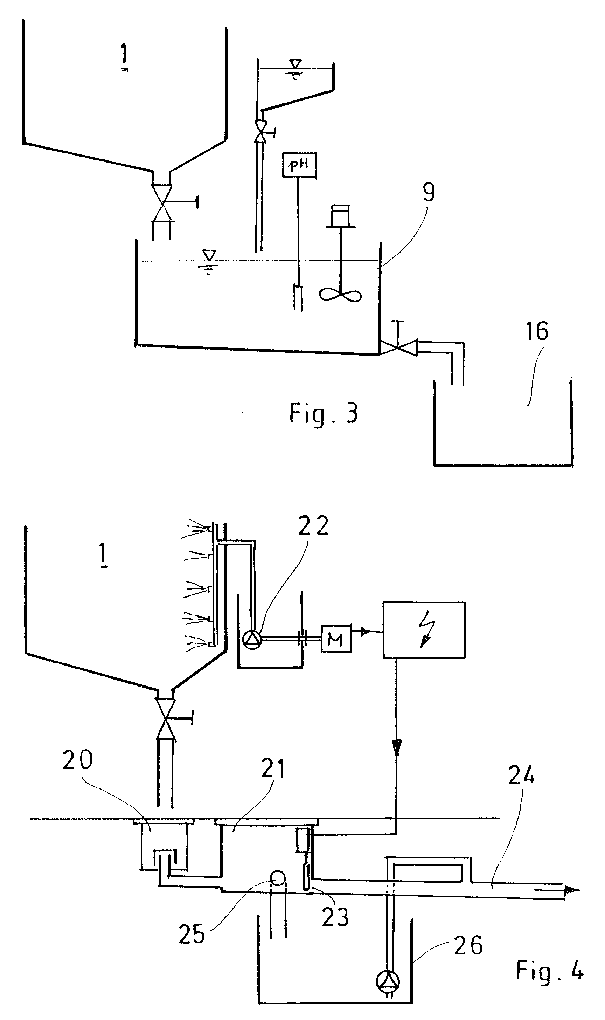

Die Behandlungsanlage nach Fig. 3 unterscheidet sich von der nach Fig. 2 dadurch, daß dem Neutralisationsbecken 9 eine weitere Behandlungsstufe 16 in Form einer Emulsions-Spaltanlage oder einer Ad/Absorptionseinrichtung nachgeschaltet ist. Die E-Spaltanlage enthält eine Stufe zum Abtrennen des Spaltschlamms. Bei einer Adsorptionseinrichtung wird das Adsorptionsmittel in einer Regenerierungsstufe aufbereitet.

Die Anlage nach Fig. 4 eignet sich besonders für den nachträglichen Einbau in vorhandene Räucheranlagen. Dem vorhandenen Bodenablauf 20 (mit Geruchverschluß !) wird ein Umschaltschacht 21 nachgeordnet, der einen von der Förderpumpe 22 für die Spülflüssigkeit gesteuerten Schließschieber 23 am Auslauf 24 des Umschaltschachts aufweist. Ein im Umschaltschacht höhergelegter Überlauf 25 führt dann die Spülflüssigkeit in eine Abwasserbehandlungsanlage 26, die das gereinigte Abwasser dann in die Kanalisation entläßt.

## Patentansprüche

1. Verfahren zur Behandlung der bei der Säuberung von Garkammern für die Räucherung von Fleischwaren anfallenden Spülflüssigkeit, **dadurch gekennzeichnet**, daß die aus Rauchharzen, Reinigungsmitteln und Wasser bestehende Spülflussigkeit getrennt von sonstigen Abwässern aufgefangen und einer Abtrennung der wassergefährdenden Inhaltsstoffe oder ihrer Umwandlung in ungefährliche Stoffe unterworfen oder getrennt entsorgt wird.

2. Verfahren nach Anspruch 1, **dadurch gekennzeichnet**, daß die Spülflüssigkeit einer Neutralisations unterworfen wird.

3. Verfahren nach Anspruch 2, **dadurch gekennzeichnet**, daß der Neutralisation eine Emulsionsspaltung nachgeschaltet ist.

4. Verfahren nach Anspruch 2, **dadurch gekennzeichnet**, daß der Neutralisation eine Adsorption oder Absorption nachgeschaltet ist.

5. Verfahren nach Anspruch 2 bis 4, **dadurch gekennzeichnet**, daß mit organischen Säuren neutralisiert wird.

6. Verfahren nach Anspruch 3, **dadurch gekennzeichnet**, daß der bei der Emulsionsspaltung anfallende Spaltschlamm durch Flotation abgetrennt wird.

7. Verfahren nach Anspruch 4, **dadurch gekennzeichnet**, daß die Adsorption an Aktivkohle erfolgt.

8. Verfahren nach Anspruch 1, **dadurch gekennzeichnet**, daß die Abtrennung der wassergefährdenden Inhaltsstoffe durch Flüssig/Flüssig-Extraktion erfolgt.

9. Verfahren nach Anspruch 8, **dadurch gekennzeichnet**, daß an Paraffinöl extrahiert wird.

10. Verfahren nach Anspruch 8, **dadurch gekennzeichnet**, daß an Perchlorethylen extrahiert wird.

11. Verfahren nach Anspruch 2 bis 5, **dadurch gekennzeichnet**, daß das Neutralisationsmittel von der Menge des verwendeten Reinigungsmittels dosiert wird.

12. Verfahren nach Anspruch 2 bis 5, **dadurch gekennzeichnet**, daß das Neutralisationsmittel nach dem im Ablauf des Garraumes gemessenen pH-Werts dosiert wird.

13. Verfahren nach Anspruch 1, **dadurch gekennzeichnet**, daß im Ablauf des Garraumes eine Umschalteinrichtung von der Kanalisation auf die Abwasserbehandlungseinrichtung vorgesehen ist, die von dem Beginn des Säuberungsvorgangs oder dem in einem Auffangbehälter vorgesehenen Spiegelfühler angesteuert wird.

14. Verfahren nach Anspruch 1 bis 13, **dadurch gekennzeichnet**, daß die Sammel- und Behandlungseinrichtung für die Spülflüssigkeit von der Programmautomatik der Räucheranlage mitgesteuert wird.

15. Einrichtung zur Durchführung des Verfahrens nach einem oder mehreren der Ansprüche 1 bis 14, enthaltend eine Garkammer (1) mit Zufuhreinrichtung für die Rauchgase und einem Ablauf (4) für die bei der Reinigung anfallende Spülflüssigkeit, **gekennzeichnet**, durch eine vor oder in der Garkammer (1) liegende Auffangrinne, die mit einer Umschalteinrichtung (23, 2 ) in eine Behandlungseinrichtung (26) ausgerüstet ist.

16. Einrichtung nach Anspruch 15, **dadurch gekennzeichnet**, daß der Behandlungseinrichtung (8) ein Sammelbehälter (5) mit einer Pumpe (6) vorgeschaltet ist.

17. Einrichtung nach Anspruch 15 oder 16, **dadurch gekennzeichnet**, daß die Auffangrinne aus Polyesterbeton oder mit Kunstharz beschichtetem Beton besteht.
